# DEMANDE DE BREVET EUROPEEN

(11) **EP 1 820 599 A2**
(43) Date de publication de la demande: **22.08.2007**
(21) Numéro de dépôt: 07300708.0
(22) Date de dépôt: 09.01.2007
(51) Int. Cl.: B23K 35/40, B21C 37/08, B23K 35/02, B23K 26/00

(54) **Procédé de fabrication de fils fourrés de soudage, par soudage par faisceau laser**

(30) Priorité: 20.02.2006 FR 0650588
(71) Demandeur: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Astier, Denis, 95300 Ennery (FR)
(74) Mandataire: Pittis, Olivier

(57) **Abrégé**

L'invention porte sur un procédé de fabrication d'un tube soudé contenant des éléments de remplissage, dans lequel on amène, de manière continue, une feuille métallique longiligne que l'on met en forme de gouttière et dans laquelle on introduit les éléments de remplissage. Ensuite, on met en forme sensiblement de tube la feuille ainsi remplie par rapprochement de ses deux bords longitudinaux jusqu'à obtenir un contact ou un quasi-contact entre ceux-ci. Selon l'invention, on opère ensuite une rotation axiale du tube selon un angle compris entre 45° et 110° par rapport à la verticale, et on réalise un soudage par faisceau laser desdits deux bords longitudinaux du tube. Application du procédé à la fabrication de fil fourrés de soudage et fil fourré ainsi obtenu.

## Description

La présente invention concerne un procédé de fabrication de tubes en continu, lesquels sont préalablement remplis d'éléments de remplissage, en particulier de matières pulvérulentes ou granulées, puis soudés et peuvent être laminés et/ou tréfilés jusqu'à leur diamètre d'utilisation, en particulier de tubes destinés à constituer des fils fourrés pour soudage à l'arc.

Actuellement pour fabriquer des fils fourrés étanches utilisables en soudage à l'arc, deux procédés sont couramment utilisés.

Selon un premier procédé connu, on réalise un tube en continu sur une formeuse, à la sortie de laquelle, le tube est soudé à haute fréquence (HF). Ce tube soudé est mis en forme de couronne puis celle-ci est ensuite remplie par vibration avec des éléments de remplissage, tels des poudres et/ou des granulés. La granulation est recommandée pour garder une homogénéité des éléments pulvérulents, lors du remplissage du tube.

Toutefois, cette phase de remplissage est une phase longue et délicate du procédé, et elle conditionne l'homogénéité donc la qualité du produit final. Si cette phase de remplissage n'est pas complètement maîtrisée ou s'il survient un problème lors de cette phase, le produit obtenu s'en trouve altéré.

Selon un deuxième procédé connu, on réalise un tube en continu sur une formeuse et l'on introduit des éléments de remplissage pulvérulents et/ou granulaire dans le pré-tube, avant soudage des bords longitudinaux du tube l'un avec l'autre, par exemple par soudage HF, à l'arc, laser ou autre.

Or, si le soudage HF est généralement bien adapté aux matériaux ferromagnétiques, on a constaté en pratique que, lorsque le tube contient aussi des éléments pulvérulents non totalement amagnétiques, ceux-ci, sous l'effet du champ magnétique très intense créé par le courant de soudage HF, sont « aspirés » et viennent contaminer la soudure du tube en cours de réalisation, ce qui provoque des défauts ou au minimum une fragilité accrue du joint soudé, lequel ne peut pas supporter sans rupture les transformations ultérieures qu'il doit subir, telles des étapes habituelles de tréfilage et de laminage.

Pour tenter de s'affranchir des inconvénients et des problèmes susmentionnés survenant en soudage HF, lorsque le tube contient des éléments pulvérulents magnétiques, il a été proposé de réaliser un soudage à l'arc des bords longitudinaux du tube, par exemple par procédé TIG multi-électrodes ou par faisceau laser.

Cependant, ces procédés engendrent d'autres problèmes ou limitations.

Ainsi, le soudage TIG multi-électrodes est un procédé relativement lent si l'on veut avoir une pénétration complète lors du soudage. Ainsi, on obtient une vitesse de soudage d'à peine 3,5 m/min pour une épaisseur soudée de 2,2 mm et ce, malgré la mise en oeuvre simultanée de 8 électrodes TIG alignées le long du plan de joint à réaliser. Ceci est bien entendu totalement insuffisant au plan industriel.

Le soudage laser, du fait de la densité d'énergie importante qu'il engendre, permet, quant à lui, d'obtenir une pénétration complète lors du soudage du tube et ce, à des vitesses de 3 à 4 fois supérieures à celles obtenues avec un procédé de soudage TIG multi-électrodes.

Toutefois, pour obtenir une pleine pénétration avec un faisceau laser, il est obligatoire que le faisceau laser, qui vient impacter perpendiculairement le joint à souder, débouche à l'intérieur du tube.

On comprend immédiatement que cela affecte la poudre qui se trouve à l'intérieur du tube, c'est-à-dire sur la trajectoire du faisceau laser, puisque le faisceau laser va obligatoirement entrer dans le tube et venir frapper la surface des éléments de remplissage contenu dans le tube en les détériorant puisque le faisceau arrive verticalement sur lesdits éléments de remplissage. Ce procédé n'est donc pas adapté au soudage de tubes préalablement remplis d'éléments de remplissage avant leur soudage et ne peut être utilisé efficacement qu'avec des tubes vides.

Or, l'introduction des éléments de remplissage avant soudage du tube, par un système à tapis par exemple, présente les avantages de supprimer la granulation obligatoire lors du remplissage du tube après soudage, comme expliqué ci-avant, et de conduire à une très bonne homogénéité du mélange de poudres et à une constance du taux de remplissage qui sont des conditions nécessaires pour avoir une qualité acceptable du produit fini, en particulier lorsque le tube soudé rempli de poudres est destiné à être utilisé en tant que fil fourré de soudage.

De tels procédés sont notamment décrits par les documents US-A-5,192,016, EP-A-812648, EP-A-489167 et EP-A-589470.

Le problème qui se pose dès lors est de proposer un procédé amélioré de fabrication industrielle en continu d'un tube contenant des éléments de remplissage, en particulier des poudres ou analogues, lequel tube est refermé par soudage le long de ces deux bords longitudinaux, postérieurement à son remplissage avec les éléments de remplissage, lequel procédé permette de réaliser un soudage à pleine pénétration selon toute l'épaisseur dudit tube à des vitesses de l'ordre de celles obtenues en soudage laser classique mais sans engendrer les problèmes de détérioration des éléments de remplissage contenus dans le tube susmentionnés.

La solution est un procédé de fabrication d'un tube métallique soudé contenant des éléments de remplissage, dans lequel on met en oeuvre les étapes successives suivantes :
a) on amène, de manière continue, une feuille métallique longiligne présentant deux bords longitudinaux,
b) on met en forme de gouttière au moins une partie de ladite feuille métallique longiligne par rapprochement l'un vers l'autre de ses deux bords longitudinaux,
c) on introduit des éléments de remplissage dans la feuille métallique en forme de gouttière,
d) on met en forme sensiblement de tube au moins une partie de ladite feuille métallique longiligne remplie à l'étape c) en continuant le rapprochement l'un vers l'autre de ses deux bords longitudinaux jusqu'à obtenir un contact ou un quasi-contact entre lesdits deux bords longitudinaux,
   caractérisé en ce que, subséquemment à l'étape d) :
e) on opère une rotation axiale du tube contenant les éléments de remplissage selon un angle compris entre 45° et 110° par rapport à la verticale, et
f) on réalise un soudage par faisceau laser desdits deux bords longitudinaux du tube mis en contact l'un avec l'autre à l'étape d).

Selon le cas, le procédé de l'invention peut comprendre l'une ou plusieurs des caractéristiques suivantes :
- le soudage du tube est à pleine pénétration ou quasi à pleine pénétration.
- à étape e), on opère une rotation axiale du tube selon un angle compris entre 60° et 105° par rapport à la verticale.
- à l'étape e), on opère une rotation axiale du tube selon un angle compris entre 80° et 100° par rapport à la verticale.
- à l'étape e), on opère une rotation axiale du tube selon un angle compris entre 85° et 95° par rapport à la verticale.
- à l'étape e), on opère une rotation axiale du tube selon un angle de l'ordre de 90° par rapport à la verticale.
- durant les étapes a) à f), la feuille métallique est, en outre, animée d'un mouvement de déplacement continu en translation, par exemple aux moyens de galets d'entraînements rotatifs motorisés.
- les éléments de remplissage occupent jusqu'à 50% du volume interne du tube.
- le tube soudé obtenu est tréfile et/ou laminé, subséquemment à l'étape f).
- le tube soudé obtenu est un fil fourré de soudage à l'arc.
- l'enveloppe du tube est en acier ; toutefois, l'invention n'est pas limitée au soudage de feuillard d'acier et peut être appliquée à tout type de métal soudable ferreux ou non ferreux, par exemple sur de l'aluminium ou ses alliages.

L'invention porte aussi sur un fil fourré de soudage à l'arc formé d'une enveloppe métallique externe, en particulier en acier, contenant des éléments de remplissage pulvérulents et/ou granulaires, ladite enveloppe externe comportant un joint de soudage longitudinal à pleine pénétration, caractérisé en ce qu'il a été obtenu directement par le procédé selon l'invention. De préférence, moins de 2% des éléments de remplissage qu'il contient ont été détériorés durant le soudage dudit tube, de préférence moins de 1%, préférentiellement encore moins de 0,6%. Avantageusement, il contient du rutile en tant qu'élément de remplissage.

Autrement dit, la présente invention propose d'améliorer les procédés de fabrication en continu de tubes, notamment de fils fourrés de soudage, où le remplissage des tubes avec des poudres pulvérulentes ou granulées, par exemple à l'aide de tapis doseurs ou analogues, se fait avant soudure des bords longitudinaux de la feuille métallique servant à réaliser l'enveloppe externe du tube, et où le soudage est opéré ensuite au moyen d'un faisceau laser avec pleine pénétration mais sans affecter ou détériorer les poudres préalablement introduites.

Pour ce faire, une feuille métallique, par exemple en acier, présentant deux bords longitudinaux parallèles l'un à l'autre est d'abord mise, de manière connue en soi, en forme de gouttière, c'est-à-dire sensiblement en forme de U (en coupe transversale), par déformation mécanique à l'aide de moyens de déformation mécanique, tels des galets formeurs et presseurs, de manière à rapprocher les deux bords longitudinaux l'un de l'autre.

La feuille métallique est par ailleurs animée d'un mouvement de translation dans le sens de son axe longitudinal, de manière à avoir un procédé de fabrication en continu, ce qui implique que la déformation mécanique et la mise en forme de la feuille se font de manière progressive au fur et à mesure de son avancée, c'est-à-dire de son entraînement par des moyens d'entraînements, par exemple des galets d'entraînement rotatifs motorisés.

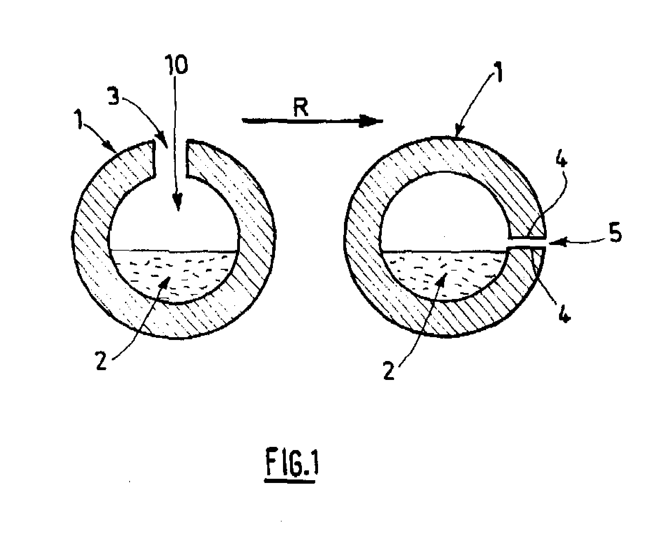

Une fois mise en forme de U, comme schématisé sur la Figure 1 illustrative, on remplit (flèche 10) la gouttière ou tube 1 avec des éléments de remplissage 2, telles des poudres métalliques ou analogues, via son ouverture 3 qui en position verticale, c'est-à-dire située sur le dessus du tube 1.

Ensuite, comme visible sur la Figure 1, par un autre jeu de galets, on fait pivoter le tube 1 d'un angle prédéfini, de préférence selon un angle de rotation R de l'ordre de 90°, autour de son axe longitudinal de façon à pouvoir souder par faisceau laser 5, en position corniche, les deux bords longitudinaux 4 l'un avec l'autre, et non plus verticalement comme selon l'art antérieur. Autrement dit, selon l'invention, le faisceau laser arrive latéralement au tube et non plus verticalement comme réalisé dans l'art antérieur.

Par un système vibrant, on contraint le niveau supérieur de poudre 2 contenue dans le fil 1 à rester dans un plan horizontal. Cette vibration n'engendre pas de ségrégation longitudinale donc n'est pas néfaste pour l'homogénéité du produit.

Puis, on opère un nouveau rapprochement des bords du tube 1, l'un vers l'autre, jusqu'à les amener au contact l'un de l'autre ou à un quasi-contact, c'est-à-dire de manière à avoir un espacement très faible, voire quasi nul, entre les deux bords, en formant ainsi un plan de joint. Ce rapprochement peut se faire au moyen de galets presseurs par exemple ou de tout autre moyen permettant de déformer mécaniquement la feuille métallique pour lui conférer une forme de O (vue en coupe transversale), c'est-à-dire une forme circulaire, ovale, elliptique ou analogue ; toutefois, d'autres formes sont également possibles.

Compte tenu de la densité des poudres et des taux de remplissage couramment utilisés, on veille à ce que le niveau haut de la poudre soit en dessous du plan médian horizontal du tube 1 de sorte que le faisceau 5, bien que débouchant, n'affecte pas la poudre 2 lors d'un soudage à pleine pénétration.

Autrement dit, comme montré sur la Figure 1, on introduit dans le tube 1, lors de son remplissage, une quantité de poudres de remplissage 2 choisie de manière à ce que son niveau maximum ou niveau haut, reste en-dessous du plan de joint formé par les bords 4 du tube.

Grâce au procédé de l'invention, la présence de la poudre 2 dans le tube 1 ne s'oppose plus à son soudage par faisceau laser 5 à pleine pénétration qui est impératif pour résister aux contraintes des opérations de laminage subséquentes, et ce, grâce à la rotation R opérée du tube 1 selon un angle prédéterminé, de préférence de l'ordre de 90°.

En outre, le procédé de l'invention présente aussi l'avantage de faciliter considérablement le réglage des paramètres du faisceau laser car on n'est plus obligé, comme dans l'art antérieur, de ce régler le faisceau à «la limite de la pénétration débouchante» qui est difficile à maîtriser et source de soufflures dans la soudure. De ce fait, le procédé de l'invention est beaucoup plus fiable au plan industriel.

Le procédé de l'invention a été appliqué au soudage, à pleine pénétration, d'un tube d'acier d'environ 2,2 mm d'épaisseur, en position corniche, tel que précédemment décrit et illustré sur la Figure 1, à une vitesse de 11 m/mn, lequel tube contenait une poudre de rutile (TiO₂) dont le taux de remplissage était de 18,6%.

Après soudage, le tube soudé ainsi obtenu a été analysé et on a trouvé que le taux de poudre ayant subit un « léchage » par le faisceau laser était d'à peine 0,4 %. A titre comparatif, des essais réalisés avec un procédé selon l'art antérieur, c'est-à-dire avec soudage identique mais en position verticale et une pénétration à la « limite du débouchant », conduit à un taux de poudre ayant subit une dégradation de 4%.

Il en ressort que le procédé de l'invention conduit à une dégradation 10 fois moindre de la poudre de remplissage et permet, en outre, d'utiliser une poudre de faible granulométrie.

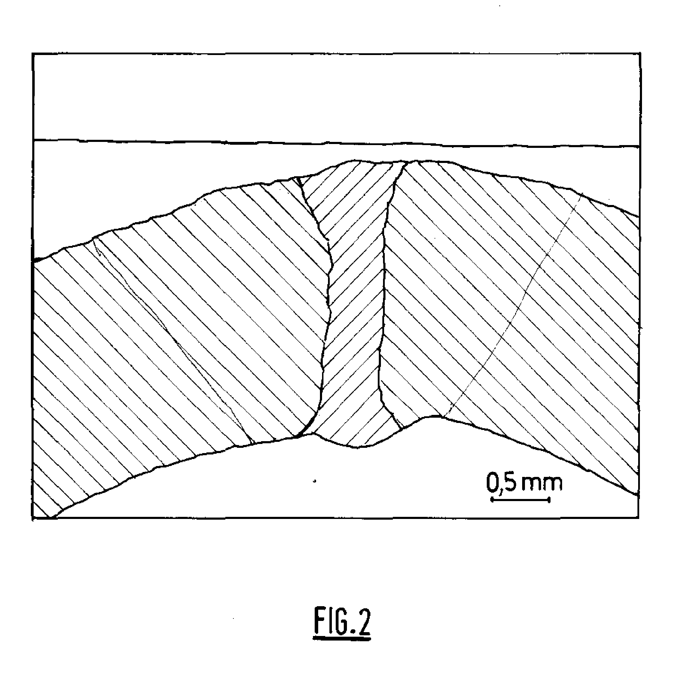

Par ailleurs, la qualité du joint obtenu, lors du soudage du tube à pleine pénétration, est excellente, comme en témoigne la Figure 2 qui est une vue en coupe transversale, au niveau du joint obtenu, du fil soudé obtenu par le procédé de l'invention.

Le procédé de fabrication de tube selon l'invention permet donc de réaliser des fils fourrés de soudage, remplis d'éléments de remplissage avant soudage, puis soudés par laser à pleine pénétration, sans affecter les éléments de remplissage qu'ils contiennent, en particulier des poudres de remplissage de faible granulométrie.

## Revendications

1. Procédé de fabrication d'un tube métallique soudé contenant des éléments de remplissage, dans lequel on met en oeuvre les étapes successives suivantes :
a) on amène, de manière continue, une feuille métallique longiligne présentant deux bords longitudinaux,
b) on met en forme de gouttière au moins une partie de ladite feuille métallique longiligne par rapprochement l'un vers l'autre de ses deux bords longitudinaux,
c) on introduit des éléments de remplissage dans la feuille métallique en forme de gouttière,
d) on met en forme sensiblement de tube au moins une partie de ladite feuille métallique longiligne remplie à l'étape c) en continuant le rapprochement l'un vers l'autre de ses deux bords longitudinaux jusqu'à obtenir un contact ou un quasi-contact entre lesdits deux bords longitudinaux,
**caractérisé en ce que**, subséquemment à l'étape d) :
e) on opère une rotation axiale du tube contenant les éléments de remplissage selon un angle compris entre 45° et 110° par rapport à la verticale, et
f) on réalise un soudage par faisceau laser desdits deux bords longitudinaux du tube mis en contact l'un avec l'autre à l'étape d).

2. Procédé selon la revendication 1, **caractérisé en ce que** le soudage du tube est à pleine pénétration ou quasi à pleine pénétration.

3. Procédé selon l'une des revendications 1 ou 2, **caractérisé en ce qu'**à l'étape e), on opère une rotation axiale du tube selon un angle compris entre 60° et 105° par rapport à la verticale.

4. Procédé selon l'une des revendications 1 à 3, **caractérisé en ce qu'**à l'étape e), on opère une rotation axiale du tube selon un angle compris entre 80° et 100° par rapport à la verticale.

5. Procédé selon l'une des revendications 1 à 4, **caractérisé en ce qu'**à l'étape e), on opère une rotation axiale du tube selon un angle compris entre 85° et 95° par rapport à la verticale.

6. Procédé selon l'une des revendications 1 à 5, **caractérisé en ce qu'**à l'étape e), on opère une rotation axiale du tube selon un angle de l'ordre de 90° par rapport à la verticale.

7. Procédé selon l'une des revendications 1 à 6, **caractérisé en ce que**, durant les étapes a) à f), la feuille métallique est, en outre, animée d'un mouvement de déplacement continu en translation, par exemple aux moyens de galets d'entraînements rotatifs motorisés.

8. Procédé selon l'une des revendications 1 à 7, **caractérisé en ce que** les éléments de remplissage occupent jusqu'à 50% du volume interne du tube.

9. Procédé selon l'une des revendications 1 à 8, **caractérisé en ce que** le tube soudé obtenu est tréfile et/ou laminé, subséquemment à l'étape f).

10. Procédé selon l'une des revendications 1 à 9, **caractérisé en ce que** le tube soudé obtenu est un fil fourré de soudage à l'arc.

11. Fil fourré de soudage à l'arc formé d'une enveloppe métallique externe contenant des éléments de remplissage pulvérulents et/ou granulaires, ladite enveloppe externe comportant un joint de soudage longitudinal à pleine pénétration, **caractérisé en ce qu'**il a été obtenu directement par le procédé selon l'une des revendications 1 à 10.

12. Fil fourré selon la revendication 11, **caractérisé en ce que** moins de 2% des éléments de remplissage qu'il contient ont été détériorés durant le soudage dudit tube.

13. Fil fourré selon l'une des revendications 11 ou 12, **caractérisé en ce que** moins de 1% des éléments de remplissage qu'il contient ont été détériorés durant le soudage dudit tube.

14. Fil fourré selon l'une des revendications 11 à 13, **caractérisé en ce que** moins de 0,6 % des éléments de remplissage qu'il contient ont été détériorés durant le soudage dudit tube.

15. Fil fourré selon l'une des revendications 11 à 14, **caractérisé en ce qu'**il comporte une enveloppe en acier et/ou qu'il contient du rutile en tant qu'élément de remplissage.
